# EUROPEAN PATENT SPECIFICATION

(11) **EP 1 700 717 B1**
(45) Date of publication and mention of the grant of the patent: **02.04.2008**
(21) Application number: 05028626.9
(22) Date of filing: 29.12.2005
(51) Int. Cl.: B60C 1/00, C08K 5/00, C06D 3/00

(54) **Tread rubber composition for color smoke tires, tire comprising the same, and method of manufacturing the same**
Kautschukzusammensetzung für Reifenlaufflächen von Farbrauchreifen, Reifen, der diese enthält und Verfahren zur Herstellung von solchen
Composition de caoutchouc pour bandes de roulement pour pneumatiques produisant une fumée colorée, pneumatique comprenant celle-ci et procédé de fabrication celle-ci

(30) Priority: 08.03.2005 US 659453 P; 22.08.2005 KR 2005076934
(43) Date of publication of application: 13.09.2006
(73) Proprietor: Kumho Tire Co., Inc., Gwangsan-gu Gwangju 506-711 (KR)
(72) Inventor: Choi, Hee-Sung, Gwangsan-gu Gwangju 506-752 (KR); Han, Seung-Cheol, Buk-gu Gwangju 500-751 (KR); Sohn, Bong-Young, Seo-gu Gwangju 502-156 (KR); James, Palombo L. Kumho Technical Center, Akron Ohio 44333 (US)
(74) Representative: Schweitzer, Klaus

(56) References cited:
- DE-A1- 19 613 801
- DE-A1- 19 938 857
- GB-A- 191 217 830
- US-A1- 2004 084 120
- PATENT ABSTRACTS OF JAPAN vol. 014, no. 505 (C-0775), 5 November 1990 (1990-11-05) & JP 02 208337 A (YOKOHAMA RUBBER CO LTD:THE), 17 August 1990 (1990-08-17)

## Description

The present invention relates, generally, to a tread rubber composition for tires, and, more particularly, to a tread rubber composition for tires, which generates color smoke at motor sports events, such as drifting, thus providing visual effects.

Drifting, which originated in Japan and is growing in popularity in motor sports all over the world, is in a form of sliding or skidding sideways by skilled drivers. Unlike other motor sports, drifting aims not to maintain traction power but to cause cars to drive as though sliding on ice or snowy roads. Typically, drifting competitors conduct drifting using their rear tires at events.

Although conventional smoke-generating techniques have been attempted at drifting events to exhibit visual effects, the color of smoke generated is simply white, which does not attract much interest. Thus, the development of a tread rubber composition for tires, which gives large interest and enjoyment to drivers and spectators by virtue of a tire emitting various colors of smoke, is required.

Accordingly, the present invention has been made keeping in mind the above problems occurring in the prior art, and an object of the present invention is to provide a tread rubber composition for tires, which can generate smoke, having a single color or mixed colors selected from among various colors, at a predetermined temperature or higher due to the frictional contact between the tire and the road surface, so as to confer enjoyment and satisfy requirements of drivers at motor sports events, such as drifting.

Another object of the present invention is to provide a tire comprising the tread rubber composition.

A further object of the present invention is to provide a method of manufacturing the tread rubber composition.

In order to accomplish the above objects, the present invention provides a tread rubber composition for tires, which comprises a sublimation dye that is activated by heat, generated by the frictional contact with a road surface, to generate smoke having various colors at a wavelength of about 39-76x10⁻⁶ cm in a frequency range of about 39.5-77x10⁻¹³ vps (vibrations per second).

According to the present invention, the tread rubber composition may be included in the tread of a tire mounted to trucks/LTRs, automobile cars, and motor sports cars.

In the tread rubber composition, the sublimation dye may be contained in an amount of 0.1-30 wt%, based on the total weight of the tread rubber composition.

In the tread rubber composition, the sublimation dye may be activated at 130°C or higher to generate color smoke.

In addition, the tread rubber composition forming the tread rubber may have a 300% modulus ranging from 85 to 140.

In addition, the tread rubber composition may comprise rubber material selected from the group consisting of polyisoprene rubber, polybutadiene rubber, a conjugated diene aromatic vinyl copolymer, a nitrile conjugated diene copolymer, hydrogenated NBR, hydrogenated SBR, olefin rubber, maleic acid-modified ethylene-propylene rubber, butyl rubber, a copolymer of isobutylene and aromatic vinyl or diene monomer, acryl rubber, an ionomer, halogenated rubber, chloroprene rubber, and mixtures thereof.

Further, the present invention provides a tire, comprising the tread rubber composition having at least one of the above listed properties.

Further, the present invention provides a method of manufacturing the tread rubber composition, comprising mixing a material for a tread rubber composition with a sublimation dye, which is activated by heat generated by frictional contact with a road surface to generate smoke having various colors at a wavelength of about 39-76x10⁻⁶ cm in a frequency range of about 39.5-77x10⁻¹³ vps.

The method of the present invention may comprise the addition of the sublimation dye in an amount of 0.1-30 wt%, based on the total weight of the tread rubber composition.

The method may comprise the addition of the sublimation dye which is activated at 130°C to generate color smoke.

Preferably, according to the method of the present invention, the material for a tread rubber composition may comprise rubber selected from the group consisting of polyisoprene rubber, polybutadiene rubber, a conjugated diene aromatic vinyl copolymer, a nitrile conjugated diene copolymer, hydrogenated NBR, hydrogenated SBR, olefin rubber, maleic acid-modified ethylene-propylene rubber, butyl rubber, a copolymer of isobutylene and aromatic vinyl or diene monomer, acryl rubber, an ionomer, halogenated rubber, chloroprene rubber, and mixtures thereof.
FIG. 1 is a photograph showing red smoke generated from the tire obtained in Example 1; and
FIG. 2 is a photograph showing yellow smoke generated from the tire obtained in Example 4.
FIG. 3 is a photograph showing blue smoke generated from the tire obtained in Example 7.
FIG. 4 is a photograph showing red Smoked Tire tread.
FIG. 5 is a photograph showing yellow Smoked Tire tread.
FIG. 6 is a photograph showing blue Smoked Tire tread.
Hereinafter, a detailed description will be given of the present invention.

A sublimation dye, which has generally been applied to flame preparation techniques along with an oxidizing agent, may generate color smoke when reaching an activation temperature. According to the present invention, such sublimation dyes having various colors may be used in a tread composition of a tire at drifting events or other motor sports events. When cars are driven with the wheels spinning and skidding at fast speeds on paved roads, the tread composition of a tire containing the sublimation dye reaches a very high temperature, and cloudy smoke is generated from the tire. As such, unlike conventional white smoke, in the present invention, smoke having various colors is generated at motor sports events, such as drifting, thus providing visual enjoyment.

Useful in the present invention, the sublimation dye, which is included in the tire tread, is selected from among those that may be activated at a predetermined temperature or higher. That is, any dye may be used in the present invention, as long as it is activated at a predetermined temperature or higher, and preferably, at 130°C or higher, in response to an increase in temperature due to the frictional contact between the road surface and the tire tread, to generate color smoke. When cars spin or skid, the color smoke is generated in the shape of a large cloud, emitting a spectrum having a wavelength of about 39-76x10⁻⁶ cm and a frequency of about 39.5-77x10⁻¹³ vps. Hence, the tread rubber composition comprising the sublimation color dye may exhibit smoke having various colors. For example, smoke having various colors, such as red, orange, yellow, blue, green, violet, etc., depending on the type of dye used, may be generated as desired, and a single color or two or more colors may be simultaneously generated.

A presently commercially available sublimation dye includes, for example, nitro, azo, triphenylmethane, xanthane, indigoid, quinoneimine, thiazole, anthraquinone, naphthalic acid derivatives, and diminonaphthalene quinoline derivatives. These dyes are disclosed in US Patent No. 3,690,971, the content thereof being incorporated herein by reference.

In Examples of the present invention as described below, the sublimation dye is exemplified by Smoke red, Smoke yellow, and/or Smoke blue, available from Keystone Aniline Corp., each of which belongs to a powdered anthraquinone dye having a bulk density of 350 kg/m³. Other dyes include, for example, OrcoSmoke Red 2A, OrcoSmoke Red 38, OrcoSmoke Violet XT, OrcoSmoke Violet FS, OrcoSmoke Green T, OrcoSmoke Yellow F, OrcoSmoke Yellow FT, OrcoSmoke Blue A, and OrcoSmoke Orange AO, available from Organic Dyestuffs Corp.

According to the present invention, the sublimation dye is added to the tread rubber composition in an amount of about 0.1-30 wt%, and preferably, 5-10 wt%, but is not limited thereto.

The tread rubber for a tire is essentially composed of diene rubber, which includes natural rubber and synthetic rubber, for example, polyisoprene rubber (IR), polubutadiene rubber (BR), a conjugated diene aromatic vinyl copolymer (SBR), a nitrile conjugated diene copolymer (NBR), hydrogenated NBR, hydrogenated SBR, olefin rubber (EPDM), maleic acid-modified ethylene-propylene rubber, butyl rubber, a copolymer of isobutylene and aromatic vinyl or diene monomer, acryl rubber, an ionomer, halogenated rubber, or chloroprene rubber.

The listed rubbers are disclosed in US Patent No. 6,431,236, the content thereof being incorporated herein by reference.

Of these rubbers, SBR may contain oil.

In addition, other components for a tread rubber composition may be appropriately selected from among those well-known in conventional literatures and in the art. For instance, various additives, such as a vulcanizing agent, an accelerator, an activator, an antiozonant, a softening agent, or a reinforcing agent, may be added, if necessary. The reinforcing agent includes silica and carbon black, and may further include fatty acid, zinc oxide, or wax. The vulcanizing agent includes sulfur, and may further include hydrogen peroxide.

In the present invention, the 300% modulus of the tread rubber composition forming the tread rubber is classified into 85-140, 141-169, and 170 or more. In particular, the modulus of 85-140 is preferably employed.

In addition, a tire is manufactured according to general processes, that is, mixing, extruding/calendaring, tire building, and curing. The rubber mixing process is conducted according to a typical mixing sequence. As such, the sublimation dye may be added to the initial stage of the mixing process, or to the final stage thereof, along with a vulcanizing agent. The extrusion process and the tire building process are conducted in the same manner as in typical processes, and the curing process is conducted at 140-180°C .

The smoke tire thus prepared is mounted to cars, and thus, the sublimation dye included therein is activated by frictional contact with the road surface, generating color smoke having a single color or mixed colors.

A better understanding of the present invention may be obtained through the following examples, which are set forth to illustrate, but are not to be construed as the limit of the present invention.

### Examples 1-3

### Preparation of Sample Generating Red Smoke

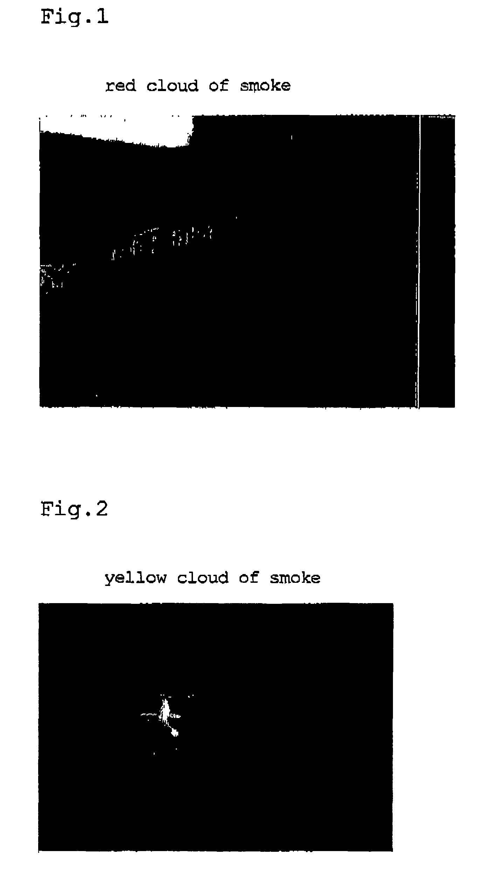

Master-batch components were mixed at 160°C and finish components were mixed at 105°C, either of which included a smoke dye (Smoke red), as shown in Table 1 below. Thereafter, the finish mixed compound was extruded, to form various semi-finished products (tread, sidewall, bead, inner liner, belt, carcass, etc.), which were then subjected to a tire building process. Subsequently, the resultant green case for a tire finally underwent a curing process at 180°C for 15 min, to manufacture a desired tire. When the tire was skidded on a paved road, cloudy red smoke was formed (FIG. 1).

**TABLE 1**

| | | Ex. 1 | Ex. 2 | Ex. 3 |
|---|---|---|---|---|
| Master-Batch | SBR (containing 37.5% oil)¹⁾ | 82.5 | 82.5 | 82.5 |
| | BR | 20 | 20 | 20 |
| | NR | 20 | 20 | 20 |
| | Carbon Black²⁾ | 40 | 30 | 30 |
| | Silica | 30 | 20 | 20 |
| | Silica Coupling Agent³⁾ | 4.8 | 3.2 | 3.2 |
| | ZnO | 3 | 3 | 3 |
| | Stearic Acid | 2 | 2 | 2 |
| | 6PPD (Antiozonant) | 2 | 2 | 2 |
| | Paraffin Oil | 10 | 10 | 10 |
| | Wax | 2 | 2 | 2 |
| | Smoke Dye (Red)⁴⁾ | 20 | 20 | 0 |
| Finish | Sulfur | 1.7 | 1.7 | 1.7 |
| | N-Cyclohexyl-2-Benzothiazolesulfen Amide | 2.0 | 2.0 | 2.0 |
| | N,N-Diphenylguanidine | 0.5 | 0.5 | 0.5 |
| | Smoke Dye (Red)⁴⁾ | 0 | 0 | 20 |
| Tensile Properties | HD'S | 73 | 72 | 72 |
| | 300%-Modulus (kg/cm²) | 125 | 128 | 127 |
| | Tensile Strength (kg/cm²) | 180 | 185 | 182 |
| | Elongation (%) | 450 | 460 | 454 |

| | | | | |
|---|---|---|---|---|
| ¹⁾ SBR-1721 (41.25phr) + SBR-1712 (41.25phr), available from Korea Kumho Petrochemical Co. Ltd. | | | | |
| ²⁾ N-103, available from Korea Carbon Black Co. Ltd. | | | | |
| ³⁾ X-50S, available from Degussa Ag. | | | | |
| ⁴⁾ Smoke red, available from Keystone Aniline Corp. | | | | |

### Examples 4-6

### Preparation of Sample Generating Yellow Smoke

Master-batch components were mixed at 160°C and finish components were mixed at 105°C, either of which included a smoke dye (Smoke yellow), as shown in Table 2 below. Thereafter, the finish mixed compound was extruded, to form various semi-finished products (tread, sidewall, bead, inner liner, belt, carcass, etc.), which were then subjected to a tire building process. Subsequently, the resultant green case for a tire finally underwent a curing process at 180°C for 15 min, to manufacture a desired tire. When the tire was skidded on a paved road, cloudy yellow smoke was formed(Fig. 2).

**TABLE 2**

| | | Ex. 4 | Ex. 5 | Ex. 6 |
|---|---|---|---|---|
| Master-Batch | SBR | 100 | 100 | 100 |
| | Carbon Black¹⁾ | 40 | 30 | 30 |
| | Silica | 30 | 20 | 20 |
| | Silica Coupling Agent²⁾ | 4.8 | 3.2 | 3.2 |
| | ZnO | 3 | 3 | 3 |
| | Stearic Acid | 2 | 2 | 2 |
| | 6PPD (Antiozonant) | 2 | 2 | 2 |
| | Paraffin Oil | 10 | 10 | 10 |
| | Wax | 2 | 2 | 2 |
| | Smoke Dye (Yellow)³⁾ | 20 | 20 | 0 |
| Finish | Sulfur | 1.7 | 1.7 | 1.7 |
| | N-Cyclohexyl-2-Benzothiazolesulfen Amide | 2.0 | 2.0 | 2.0 |
| | N,N-Diphenylguanidine | 0.5 | 0.5 | 0.5 |
| | Smoke Dye (Yellow)³⁾ | 0 | 0 | 20 |
| Tensile Properties | HD'S | 72 | 71 | 71 |
| | 300%-Modulus (kg/cm²) | 105 | 110 | 108 |
| | Tensile Strength (kg/cm²) | 185 | 190 | 186 |
| | Elongation (%) | 460 | 480 | 470 |

| | | | | |
|---|---|---|---|---|
| ¹⁾ N-103, available from Korea Carbon Black Co. Ltd. ²⁾ X-50S, available from Degussa AG. ³⁾ Smoke yellow, available from Keystone Aniline Corp. | | | | |

### Examples 7-9

### Preparation of Sample Generating Blue Smoke

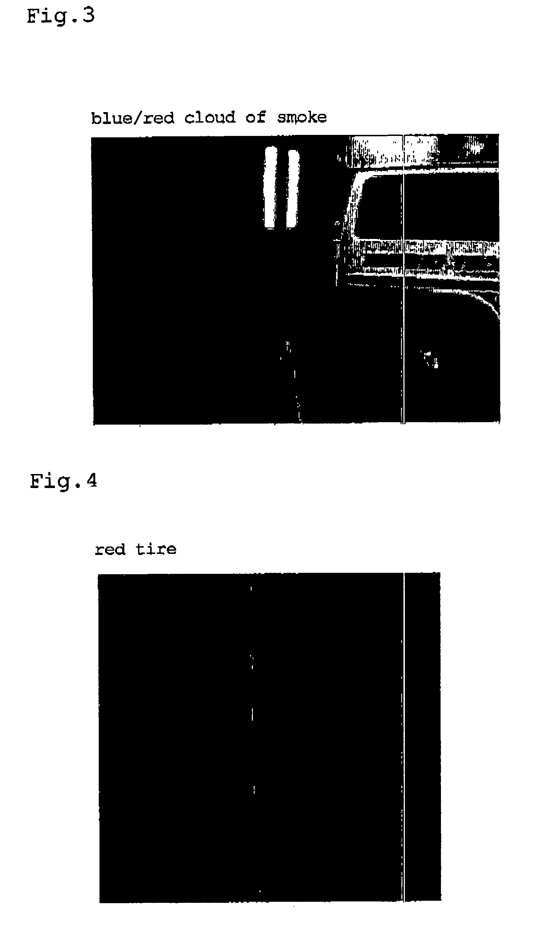

Master-batch components were mixed at 160°C and finish components were mixed at 105°C, either of which included a smoke dye (Smoke blue), as shown in Table 3 below. Thereafter, the finish mixed compound was extruded, to form various semi-finished products (tread, sidewall, bead, inner liner, belt, carcass, etc.), which were then subjected to a tire building process. Subsequently, the resultant green case for a tire finally underwent a curing process at 180°C for 15 min, to manufacture a desired tire. When the tire was skidded on a paved road, cloudy blue smoke was formed (FIG. 3).

**TABLE 3**

| | | Ex. 7 | Ex. 8 | Ex. 9 |
|---|---|---|---|---|
| Master-Batch | NR | 100 | 100 | 100 |
| | Carbon Black¹⁾ | 40 | 30 | 30 |
| | Silica | 30 | 20 | 20 |
| | Silica Coupling Agent²⁾ | 4.8 | 3.2 | 3.2 |
| | ZnO | 3 | 3 | 3 |
| | Stearic Acid | 2 | 2 | 2 |
| | 6PPD (Antiozonant) | 2 | 2 | 2 |
| | Paraffin Oil | 10 | 10 | 10 |
| | Wax | 2 | 2 | 2 |
| | Smoke Dye (Blue)³⁾ | 20 | 20 | 0 |
| Finish | Sulfur | 1.7 | 1.7 | 1.7 |
| | N-Cyclohexyl-2-Benzothiazolesulfen Amide | 2.0 | 2.0 | 2.0 |
| | N,N-Diphenylguanidine | 0.5 | 0.5 | 0.5 |
| | Smoke Dye (Blue)³⁾ | 0 | 0 | 20 |
| Tensile Properties | HD'S | 65 | 64 | 64 |
| | 300%-Modulus (kg/cm²) | 110 | 116 | 114 |
| | Tensile Strength (kg/cm²) | 225 | 235 | 230 |
| | Elongation (%) | 405 | 415 | 410 |

| | | | | |
|---|---|---|---|---|
| ¹⁾ N-103, available from Korea Carbon Black Co. Ltd. | | | | |
| ²⁾ X-50S, available from Degussa AG. | | | | |
| ³⁾ Smoke blue, available from Keystone Aniline Corp. | | | | |

### Examples 10-12

### Preparation of Sample Generating Mixed Color Smoke

Master-batch components were mixed at 160°C and finish components were mixed at 105°C, either of which included smoke dyes (Smoke red, Smoke yellow, Smoke blue), as shown in Table 4 below. Thereafter, the finish mixed compound was extruded, to form various semi-finished products (tread, sidewall, bead, inner liner, belt, carcass, etc.), which were then subjected to a tire building process. Subsequently, the resultant green case for a tire finally underwent a curing process at 180°C for 15 min, to manufacture a desired tire. When the tire was skidded on a paved road, cloudy smoke having mixed colors of red, yellow, and blue was formed.

**TABLE 4**

| | | Ex. 10 | Ex. 11 | Ex. 12 |
|---|---|---|---|---|
| Master-Batch | NR | 100 | 100 | 100 |
| | Carbon Black¹⁾ | 40 | 30 | 30 |
| | Silica | 30 | 20 | 20 |
| | Silica Coupling Agent²⁾ | 4.8 | 3.2 | 3.2 |
| | ZnO | 3 | 3 | 3 |
| | Stearic Acid | 2 | 2 | 2 |
| | 6PPD (Antiozonant) | 2 | 2 | 2 |
| | Paraffin Oil | 10 | 10 | 10 |
| | Wax | 2 | 2 | 2 |
| | Smoke Dye (Red)³⁾ | 10 | 10 | 0 |
| | Smoke Dye (Yellow)⁴⁾ | 5 | 5 | 0 |
| | Smoke Dye (Blue)⁵⁾ | 5 | 5 | 0 |
| Finish | Sulfur | 1.7 | 1.7 | 1.7 |
| | N-Cyclohexyl-2-Benzothiazolesulfen Amide | 2.0 | 2.0 | 2.0 |
| | N,N-Diphenylguanidine | 0.5 | 0.5 | 0.5 |
| | Smoke Dye (Red)³⁾ | 0 | 0 | 10 |
| | Smoke Dye (Yellow)⁴⁾ | | | 5 |
| | Smoke Dye (Blue)⁵⁾ | | | 5 |
| Tensile Properties | HD'S | 65 | 65 | 64 |
| | 300%-Modulus (kg/cm²) | 112 | 115 | 115 |
| | Tensile Strength (kg/cm²) | 226 | 237 | 232 |
| | Elongation (%) | 407 | 416 | 412 |

| | | | | |
|---|---|---|---|---|
| ¹⁾ N-103, available from Korea Carbon Black Co. Ltd.0 | | | | |
| ²⁾ X-50S, available from Degussa AG. | | | | |
| ³⁾ Smoke red, available from Keystone Aniline Corp. | | | | |
| ⁴⁾ Smoke yellow, available from Keystone Aniline Corp. | | | | |
| ⁵⁾ Smoke blue, available from Keystone Aniline Corp. | | | | |

### Examples 13-15

### Preparation of Sample Generating Colorful Smoke

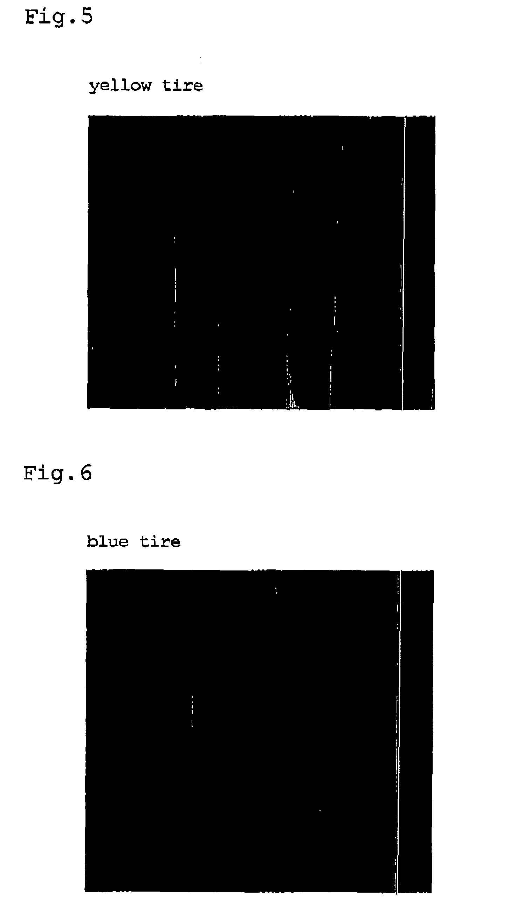

Master-batch components were mixed at 160°C and finish components were mixed at 105°C, either of which included smoke dyes (Smoke red, Smoke yellow, Smoke blue), as shown in Table 5 below. Thereafter, the finish mixed compound was extruded, to form various semi-finished products (tread, sidewall, bead, inner liner, belt, carcass, etc.), which were then subjected to a tire building process. Subsequently, the resultant green case for a tire finally underwent a curing process at 180°C for 15 min, to manufacture a desired tire(Fig 4,5,6). When the tire was skidded on a paved road, cloudy smoke was formed.

**TABLE 5**

| | | Ex. 13 | Ex. 14 | Ex. 15 |
|---|---|---|---|---|
| Master- Batch | SBR¹⁾ | 70 | 70 | 70 |
| | NR | 30 | 30 | 30 |
| | Silica²⁾ | 70 | 70 | 70 |
| | Silica Coupling Agent³⁾ | 6 | 6 | 6 |
| | ZnO | 3 | 3 | 3 |
| | Stearic Acid | 2 | 2 | 2 |
| | 6PPD (Antiozonant) | 2 | 2 | 2 |
| | Paraffin Oil | 20 | 20 | 20 |
| Finish | Sulfur | 1.9 | 1.9 | 1.9 |
| | N-Cyclohexyl-2-Benzothiazolesulfen Amide | 2.0 | 2.0 | 2.0 |
| | N,N-Diphenylguanidine | 1.4 | 1.4 | 1.4 |
| | Smoke Dye (Red)⁴⁾ | 20 | 0 | 0 |
| | Smoke Dye (Yellow) ⁵⁾ | 0 | 20 | 0 |
| | Smoke Dye (Blue)⁶⁾ | 0 | 0 | 20 |
| Tensile Properties | HD'S | 72 | 73 | 73 |
| | 300%-Modulus (kg/cm²) | 95 | 96 | 96 |
| | Tensile Strength (kg/cm²) | 145 | 140 | 140 |
| | Elongation (%) | 320 | 310 | 310 |

| | | | | |
|---|---|---|---|---|
| ¹⁾ SBR (NS-116 70.0phr) available from Nippon Zeon Co. Ltd. | | | | |
| ²⁾ Silica, available from Rhodia or Degussa Co. Ltd. | | | | |
| ³⁾ Si-69, available from Degussa Co. Ltd. | | | | |
| ⁴⁾ Smoke red, available from Keystone Aniline Corp. | | | | |
| ⁵⁾ Smoke yellow, available from Keystone Aniline Corp. | | | | |
| ⁶⁾ Smoke blue, available from Keystone Aniline Corp. | | | | |

As described above, the present invention provides a tread rubber composition for tires, a tire comprising the tread rubber composition, and a method of manufacturing the tread rubber composition. In the present invention, the tread rubber composition can generate smoke having a single color or mixed colors selected from among various colors at a predetermined temperature or higher due to the frictional contact between the tire and the road surface, therefore resulting in smoke giving optimal enjoyment and satisfying requirements of drivers at motor sports events, such as drifting.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A tread rubber composition for tires, comprising a sublimation dye, which is activatable by heat generated by frictional contact with a road surface to generate smoke having various colors at a wavelength of about 39-76x10⁻⁶ cm in a frequency range of about 39.5-77x10⁻¹³ vps.

2. The composition according to claim 1, wherein the sublimation dye is comprised in an amount of 0.1-30 wt%, based on the total weight of the tread rubber composition.

3. The composition according to claim 1, wherein the sublimation dye is temperature-activatable at 130°C or higher.

4. The composition according to claim 1, wherein the tread rubber composition has a 300% modulus ranging from 85 to 140.

5. The composition according to claim 1, wherein the tread rubber composition comprises rubber selected from the group consisting of polyisoprene rubber, polybutadiene rubber, a conjugated diene aromatic vinyl copolymer, a nitrile conjugated diene copolymer, hydrogenated NBR, hydrogenated SBR, olefin rubber, maleic acid-modified ethylene-propylene rubber, butyl rubber, a copolymer of isobutylene and aromatic vinyl or diene monomer, acryl rubber, an ionomer, halogenated rubber, chloroprene rubber, and mixtures thereof.

6. A tire, comprising the tread rubber composition of any one of claims 1 to 5.

7. A method of manufacturing a tread rubber composition, comprising mixing a material for a tread rubber composition with a sublimation dye, which is activatable by heat generated by frictional contact with a road surface to generate smoke having various colors at a wavelength of about 39-76x10⁻⁶ cm in a frequency range of about 39.5-77x10⁻¹³ vps.

8. The method according to claim 7, wherein the sublimation dye is used in an amount of 0.1-30 wt%, based on the total weight of the tread rubber composition.

9. The method according to claim 7, wherein the sublimation dye is temperature-activatable at 130°C or higher.

10. The method according to claim 7, wherein the material for a tread rubber composition comprises rubber selected from the group consisting of polyisoprene rubber, polybutadiene rubber, a conjugated diene aromatic vinyl copolymer, a nitrile conjugated diene copolymer, hydrogenated NBR, hydrogenated SBR, olefin rubber, maleic acid-modified ethylene-propylene rubber, butyl rubber, a copolymer of isobutylene and aromatic vinyl or diene monomer, acryl rubber, an ionomer, halogenated rubber, chloroprene rubber, and mixtures thereof.

11. The use of the composition according to claim 1, wherein the tire is mounted to trucks/LTRs, automobile cars, and motor sports cars.

12. A truck/LTR, automobile or motor sports car comprising a tire according to Claim 6.

## Patentansprüche

1. Kautschukzusammensetzung für Reifen, umfassend einen Sublimationsfarbstoff, welcher durch Hitze aktivierbar ist, die durch Reibungskontakt mit einer Straßenoberfläche erzeugt wird, um Rauch zu erzeugen, welcher verschiedene Farben bei einer Wellenlänge von ca. 39-76x10⁻⁶ cm in einem Frequenzbereich von ca. 39,5-77x10⁻¹³ vps aufweist.

2. Verbindung nach Anspruch 1, worin der Sublimationsfarbstoff in einer Menge von 0,1 - 30 Gew.-% , basierend auf dem Gesamtgewicht der Kautschukzusammensetzung, enthalten ist.

3. Verbindung nach Anspruch 1, worin der Sublimationsfarbstoff bei 130 °C oder mehr temperatur-aktivierbar ist.

4. Verbindung nach Anspruch 1, worin die Kautschukzusammensetzung ein 300 %-Modul im Bereich von 85 bis 140 aufweist.

5. Verbindung nach Anspruch 1, worin die Kautschukzusammensetzung Kautschuk ausgewählt aus der Gruppe bestehend aus Polyisoprenkautschuk, Polybutadienkautschuk, einem konjugierten Dien aromatischen Vinyl Copolymer, einem Nitril konjugierten Dien Copolymer, hydriertem NBR , hydriertem SBR, Olefinkautschuk, maleinsäuremodifiziertem Ethylen-Propylenkautschuk, Butylkautschuk, einem Copolymer von Isobutylen und aromatischem Vinyl oder Dienmonomer, Acrylkautschuk, einem Ionomer, halogeniertem Kautschuk, Chloroprenkautschuk und Mischungen daraus enthält.

6. Ein Reifen, umfassend die Kautschukzusammensetzung aus einem der Ansprüche 1 bis 5.

7. Verfahren zur Herstellung einer Kautschukzusammensetzung, umfassend das Mischen eines Stoffes für eine Kautschukzusammensetzung mit einem Sublimationsfarbstoff, welcher durch Hitze aktivierbar ist, die durch Reibungskontakt mit einer Straßenoberfläche erzeugt wird, um Rauch zu erzeugen, welcher verschiedene Farben bei einer Wellenlänge von ca. 39-76x10⁻⁶ cm in einem Frequenzbereich von ca. 39,5-77x10⁻¹³ vps aufweist.

8. Verfahren nach Anspruch 7, worin der Sublimationsfarbstoff in einer Menge von 0,1 - 30 Gew.-%, basierend auf dem Gesamtgewicht der Kautschukzusammensetzung, verwendet wird.

9. Verfahren nach Anspruch 7, worin der Sublimationsfarbstoff bei 130 °C oder mehr temperatur-aktivierbar ist.

10. Verfahren nach Anspruch 7, worin der Stoff für eine Kautschukzusammensetzung Kautschuk ausgewählt aus der Gruppe bestehend aus Polyisoprenkautschuk, Polybutadienkautschuk, einem konjugierten Dien aromatischen Vinyl Copolymer, einem Nitril konjugierten Dien Copolymer, hydriertem NBR, hydriertem SBR, Olefinkautschuk, maleinsäuremodifiziertem Ethylen-Propylenkautschuk, Butylkautschuk, einem Copolymer von Isobutylen und aromatischem Vinyl oder Dienmonomer, Acrylkautschuk, einem Ionomer, halogeniertem Kautschuk, Chloroprenkautschuk und Mischungen daraus umfasst.

11. Die Verwendung der Verbindung gemäß Anspruch 1, worin der Reifen an Lastkraftwagen/LTR, Automobilen und Motorsportwagen angebracht ist.

12. Ein Lastkraftwagen/LTR, Automobil oder Motorsportwagen umfassend einen Reifen nach Anspruch 6.

## Revendications

1. Composition de caoutchouc pour bande de roulement de pneus, comprenant un colorant à sublimation, qui est activable par la chaleur dégagée par le contact à frottement avec une surface de roulement pour produire une fumée de différentes couleurs à une longueur d'onde d'environ 39-76 x 10⁻⁶ cm dans un domaine de fréquences d'environ 39,5-77 x 10⁻¹³ vps.

2. Composition selon la revendication 1, dans laquelle le colorant à sublimation est compris à raison de 0,1 à 30% en poids, par rapport au poids total de la composition de caoutchouc pour bande de roulement.

3. Composition selon la revendication 1, dans laquelle le colorant à sublimation est activable sous l'action de la température à 130°C ou plus.

4. Composition selon la revendication 1, dans laquelle la composition de caoutchouc pour bande de roulement possède un module à 300% qui s'échelonne de 85 à 140.

5. Composition selon la revendication 1, laquelle composition de caoutchouc pour bande de roulement comprend un caoutchouc choisi dans le groupe constitué par un caoutchouc polyisoprène, un caoutchouc polybutadiène, un copolymère de diène conjugué et de vinyle aromatique, un copolymère de nitrile et de diène conjugué, un NBR hydrogéné, un SBR hydrogéné, un caoutchouc oléfinique, un caoutchouc éthylène-propylène modifié par l'acide maléique, un caoutchouc butyl, un copolymère d'isobutylène et de monomère vinyle aromatique ou diène, un caoutchouc acrylique, un ionomère, un caoutchouc halogéné, un caoutchouc chloroprène, et des mélanges de ceux-ci.

6. Pneu, comprenant la composition de caoutchouc pour bande de roulement selon l'une quelconque des revendications 1 à 5.

7. Procédé de fabrication d'une composition de caoutchouc pour bande de roulement, comprenant le mélange d'un matériau destiné à une composition de caoutchouc pour bande de roulement avec un colorant à sublimation, qui est activable par la chaleur dégagée par le contact à frottement avec une surface de roulement pour produire une fumée de différentes couleurs à une longueur d'onde d'environ 39-76 x 10⁻⁶ cm dans un domaine de fréquences d'environ 39,5-77 x 10⁻¹³ vps.

8. Procédé selon la revendication 7, dans lequel le colorant à sublimation est employé à raison de 0,1 à 30% en poids, par rapport au poids total de la composition de caoutchouc pour bande de roulement.

9. Procédé selon la revendication 7, dans lequel le colorant à sublimation est activable sous l'action de la température à 130°C ou plus.

10. Procédé selon la revendication 7, dans lequel le matériau destiné à une composition de caoutchouc pour bande de roulement comprend un caoutchouc choisi dans le groupe constitué par un caoutchouc polyisoprène, un caoutchouc polybutadiène, un copolymère de diène conjugué et de vinyle aromatique, un copolymère de nitrile et de diène conjugué, un NBR hydrogéné, un SBR hydrogéné, un caoutchouc oléfinique, un caoutchouc éthylène-propylène modifié par l'acide maléique, un caoutchouc butyl, un copolymère d'isobutylène et de monomère vinyle aromatique ou diène, un caoutchouc acrylique, un ionomère, un caoutchouc halogéné, un caoutchouc chloroprène, et des mélanges de ceux-ci.

11. Utilisation de la composition selon la revendication 1, dans laquelle le pneu est monté sur des camions/véhicules utilitaires, des automobiles et des voitures de sport.

12. Camion/véhicule utilitaire, automobile et voiture de sport comprenant un pneu selon la revendication 6.
